Europäisches Patentamt

European Patent Office

Office européen des brevets

(19)

(11) Veröffentlichungsnummer: **0 097 114**
A2

(12) # EUROPÄISCHE PATENTANMELDUNG

(21) Anmeldenummer: 83810224.2

(51) Int. Cl.³: **B 01 D 39/20**

(22) Anmeldetag: 31.05.83

(30) Priorität: 10.06.82 CH 3586/82

(71) Anmelder: SCHWEIZERISCHE ALUMINIUM AG, CH-3965 Chippis (CH)

(43) Veröffentlichungstag der Anmeldung: 28.12.83 Patentblatt 83/52

(72) Erfinder: Rieger, Wolfhart, Zur Mühle, CH-8263 Buch (CH)
Erfinder: Gauckler, Ludwig, Gemsgasse 11, CH-8200 Schaffhausen (CH)
Erfinder: Kampfer, Konrad, Neuhausweg 20, CH-8240 Thayngen (CH)
Erfinder: Maurer, Albert, Egelseeweg 4, CH-8240 Thayngen (CH)
Erfinder: Dellapina, Marco, Dorfstrasse 147, CH-8448 Uhwiesen (CH)
Erfinder: Nobbe, Volker, Sunnenberg, CH-8447 Dachsen (CH)

(84) Benannte Vertragsstaaten: AT CH DE FR GB IT LI NL SE

(54) Filtermedium zur Filtration von schmelzflüssigen Metallen.

(57) Filtermedium in Form eines stabilen Körpers aus keramischem Material zur Filtration von schmelzflüssigen Metallen. Das Filtermedium ist aus wenigstens zwei filterwirksamen Schichten aufgebaut, wobei eine verhältnismässig dicke Schicht mit grossem Porendurchmesser auf einer im Verhältnis dünnen Schicht mit kleinem Porendurchmesser liegt. Durch diese Anordnung wird eine möglichst vollständige innere Benetzung des Filtermediums angestrebt.

EP 0 097 114 A2

ACTORUM AG

-1-

## Filtermedium zur Filtration von schmelzflüssigen Metallen

Die Erfindung betrifft ein Filtermedium in Form eines stabilen Körpers aus keramischem Material zur Filtration von schmelzflüssigen Metallen.

Aus der US-PS 3 524 548 ist ein fester poröser Filter zur Filtration von geschmolzenem Aluminium bekannt, der aus einem gebrannten granulatähnlichen feuerfesten Material besteht, das von geschmolzenem Aluminium nicht angegriffen wird und das als Bindemittel ein glasartiges Material aufweist, das nicht mehr als 10% Kieselsäure enthält.

Als Granulat wird "fused alumina" oder "tabular alumina" genannt. Bei "fused"- oder "tabular alumina" handelt es sich um stückig gebrochenen Schmelzkorund. Dieses Material ergibt einen Filter mit relativ geringer Durchlässigkeit und Porosität. Durch die innere Struktur ist die Filterwirksamkeit und Filterkapazität beschränkt. Daher werden in der Praxis in der Regel Bündel von Filterrohren eingesetzt, um die gewünschten Durchflussmengen zu erreichen.

Zu Beginn der Filtration als auch während der Filtration müssen verhältnismässig grosse Druckunterschiede herrschen, um das schmelzflüssige Aluminium durch das Filterelement zu leiten.

Durch ein Filterelement ganz anderer Art wurde versucht, die Nachteile, wie grosse Druckunterschiede beim Filtrieren und beschränkte Filterkapazität, zu eliminieren. In der CH-PS 622 230 wird ein Filterelement beschrieben, das durch Imprägnieren eines Polyurethanschaumes mit einer keramischen Aufschlämmung, Abpressen der überschüssigen Aufschlämmung, Trocknen und Brennen hergestellt wird. Man erhält nach diesem Verfahren ein genaues Abbild des ursprünglichen organischen Schaumes in fester keramischer Form. Filterelemente dieser Art weisen eine hohe Filterkapazität und hohe Durchflussraten auf, dadurch lassen sie sich in Form einfacher Filterplatten verwenden. Diesen Filterelementen haftet der Nachteil an, dass sie in der Herstellung teuer sind. Diese Filterelemente werden zudem im Innern durch das schmelzflüssige Metall relativ schlecht benetzt.

Es ist vorgeschlagen worden, Filtermedien herzustellen, indem man vorwiegend kugeliges, feuerfestes Material, beispielsweise Hohlkugelkorund, durch Zusammensintern oder durch eine chemische hochtemperaturbeständige Bindung zu einem festen porösen Körper verarbeitet und diese Körper als Filtermedien für schmelzflüssige Metalle einsetzt.

Wird ein derartiges Filter zum Filtrieren von schmelzflüssigem Metall eingesetzt, kann sich durch einen zu grossen Anfahrwiderstand eine unerwünschte hohe Niveaudifferenz zwischen Filtereinlauf und Filterauslauf ausbilden.

Steigert man die Durchlässigkeit der Filter, beispielsweise durch eine Erhöhung der Porosität, sinkt wohl der Anfahrwiderstand, in der Regel wird damit auch der die Filtrationswirkung wesentlich bestimmende Porendurchmesser vergrössert und die Filtrationswirkung erniedrigt.

In der Regel zeigen alle diese bekannten Filterelemente die Tendenz einer schlechten inneren Benetzung. Dadurch sinkt die Durchflussrate stark ab und die Filtrierkapazität des Filtermediums wird nicht voll ausgeschöpft.

Aufgabe der Erfindung war es, die genannten Nachteile zu überwinden und Filtermedien zur Verfügung zu stellen, die durch möglichst vollständige innere Benetzung möglichst niedrige Anfahr- und Filtrierwiderstände bei möglichst hoher Filtrierwirksamkeit, hohen Durchflussraten und hoher Filterkapazität aufweisen.

Erfindungsgemäss wurde das mit einem Filtermedium nach Anspruch 1 erreicht.

Die gegenseitige Beziehung zwischen den Werten $d_A$, $f_A$ und $\lambda_A$ respektive $d_B$, $f_B$ und $\lambda_B$ bezeichnet als Grössen $H_{SA}$ und $H_{SB}$, lautet

$$\frac{d}{\lambda^2\ f}$$

und ist proportional dem Filtrierwiderstand und damit der Druckdifferenz oder Niveaudifferenz, gebildet durch jeweils eine der Filterschichten zwischen Ein- und Auslauf innerhalb einer Filtriervorrichtung. Die gesamte Druckdifferenz oder Niveaudifferenz ist proportional der Summe der Druck- oder Niveaudifferenzen der einzelnen Filterschichten.

Nach Anspruch 1 weist das erfindungsgemässe Filtermedium eine im Verhältnis dicke Schicht A mit grossen Porendurchmesser und eine, im Verhältnis zur Schicht A, dünne Schicht B mit kleinem Porendurchmesser auf.

Die Porendurchmesser werden durch die Wahl der Korngrösse eingestellt. Durch porositätserhöhende Mittel oder Massnahmen kann der Porendurchmesser in weiterem Masse eingestellt werden, als es sich allein nach den Regeln der Kugelpackungen ergeben würde.

Die Porosität bringt zum Ausdruck, wie gross das Gesamtvolumen der durchströmbaren Zwischenräume zwischen den Kugeln sind, bezogen auf das Gesamtvolumen eines Filterkörpers. Es wird als Zwischenraum nur der von den Rundungen der Körner begrenzte Raum bezeichnet, nicht aber allfällige Hohlräume im Innern der Körner.

Zweckmässig wird die Schicht A in Filtrationsrichtung oder Strömungsrichtung des Metalls vor der Schicht B angeordnet.

Die Schichten A und B können aus feuerfestem Material in Form kugeliger und/oder hohlkugeliger untereinander fest gebundener Körner gebildet sein.

In der Schicht A wird vorzugsweise Hohlkugelkorund mit einem minimalen Durchmesser von 1 mm und einem maximalen Durchmesser von 5 mm verwendet.

In der Schicht B wird vorzugsweise ebenfalls Hohlkugelkorund mit einem minimalen Durchmesser von 0,3 mm und einem maximalen Durchmesser von 2 mm verwendet.

Vorzugsweise werden die Hohlkugelkorundkörner in enger Kornverteilung angewendet, wobei in einer Kornklassierung der minimale Korndurchmesser mehr als 65% beträgt, wenn der maximale Korndurchmesser mit 100% angenommen wird.

Beispiele für Kornklassierungen für die Schicht A sind 1 - 1,4 mm, 1,4 - 1,8 mm, 1,8 - 2,5 mm, 2,5 - 3,2 mm, 3,2 - 4 mm oder 4 - 5 mm.

Für die Schicht B werden beispielsweise Kornklassierungen von 0,3 - 0,5 mm, 0,5 - 0,7 mm, 0,7 - 1 mm, 1 - 1,4 mm 1,4 - 2,0 mm angewendet.

Die durchschnittliche Korngrösse der Schicht A soll dabei immer grösser sein als die durchschnittliche Korngrösse der jeweils benachbarten Schicht B.

Die Körner aus feuerfestem Material weisen bevorzugt eine kugelige Gestalt oder annähernd kugelige Gestalt auf. Es können auch linsen- oder tropfenförmige Körner im erfindungsgemässen Sinne Anwendung finden. Je nach Herstellungsverfahren für derartige Körner können auch Mischungen verschiedener äusserer Formen erhalten werden. Die Körner können in voller oder vorzugsweise hohler Form vorliegen, wobei das feuerfeste Material in diesem Falle nur eine äussere Schale bildet, aber auch Gebilde, aufgebaut aus konzentrischen Schalen oder aus einer Vielzahl in sich offener oder geschlossener Zellen, die äusserlich durch eine Schale begrenzt sind, können Anwendung finden.

Diese unterschiedlichen Kornarten, also vollkugelige oder hohlkugelige Körner können in beliebigen Mengenverhältnissen gemischt werden. Als feuerfestes Material können die dem Fachmann geläufigen keramischen Materialien Anwendung finden. Die Auswahl richtet sich in erster Linie nach den Anfordernissen, die das zu filtrierende Gut bezüglich chemischer Stabilität, Wärmebeständigkeit, Festigkeit, Standzeit, Formbarkeit und Benetzbarkeit an den Filter stellt.

Unter die zur Anwendung gelangenden Materialien fallen metallische Oxide, wie Aluminiumoxide, beispielsweise als Korund, Böhmit, Hydrargillit, Bauxit, $SiO_2$, z.B. Perlit, Silikate, wie Mullit, Aeromullit, Silimanit oder Schamotte, dann Magnesiumoxide und Magnesiumsilikate, wie Steatit, Forsterit, Enstatit und Cordierit sowie Dolomit und die Mischungen genannter Oxide.

Als weitere metallische Oxide kommen Zirkonoxid, stabilisiert oder unstabilisiert in monokliner, tetragonaler und/ oder kubischer Form; Zinnoxid mit oder ohne Dotierung; Aluminiumtitanat, Calciumsilikate, Calcium-Magnesium-Silikate Magnesium-Aluminium-Silikate, Zirkonsilikate, Calciumaluminate, Eisen-Chrom-Oxide, Aluminiumhydroxide, hochschmelzende Gläser, sowie alle Spinelle und Perowskite in Betracht. Zu den feuerfesten Materialien sind in vorliegendem Fall auch Kohle, insbesondere in Form von Graphit, Koks oder Pech sowie ihre Mischungen zu zählen, sowie die nicht oxidischen Verbindungen Borcarbid, Titancarbid, Titandiborid und Zirkoniumdiborid, Siliciumcarbid, Siliciumnitrid und seine Mischkristalle.

Zweckmässig enthalten die Körner aus feuerfesten Materialien Aluminiumoxide, vorzugsweise als Korund und/oder Bauxit sowie Zirkonoxid oder Spinelle.

Gemische verschiedener Einzelkomponenten in unterschiedlichen Mengenverhältnissen können ebenfalls eingesetzt werden.

Kugelförmiges feuerfestes Material wird auf an sich bekannte Weise hergestellt. In der Regel erhält man kugelige Körner durch Rollgranulation, Sprühgranulation oder durch Verdüsen und anschliessende Sinterung.

Die Herstellung von Hohlkugeln ist ebenfalls bekannt.

Man kann einen Giessstrahl, beispielsweise aus flüssigem Korund, mit Pressluft oder Dampf verblasen. Dabei erhält man Hohlkugeln von bis zu 5 mm Durchmesser.

Man kann aber auch mittels eines Gasteilverfahrens einen treibfähigen Schlicker, der beispielsweise feinstteilige hochschmelzende Oxide und Kohlendioxid abgebende Substanzen oder Wasserstoffperoxid als Treibmittel enthält, einer mechanischen Zerteilung, zweckmässig durch Austropfen und/oder Verblasen, unterwerfen, und die entstehenden Tröpfchen trocknen und brennen.

In ähnlicher Weise kann man durch das bekannte Sol-Gel-Verfahren kugelförmige Körner herstellen.

Nach entsprechendem Auswahl- und Anpassungsverfahren lassen sich die erfindungsgemässen Schichten, welche die erfindungsgemässen Werte aufweisen allenfalls auch mit stückig gebrochenem Schmelzkorund herstellen. Aus den anfangs genannten Gründen wird aber ein kugeliges Material bevorzugt.

Die Verbindung der Körner untereinander kann auf verschiedene Weise erfolgen. Die Körner können durch Fremdphase gebunden sein, die einen chemischen Charakter hat, wobei Phosphate, wie Aluminiumorthophosphat, Phosphorsäure, Magnesiumorthoborat, Aluminiumhydroxychlorid und/oder Kieselgel, zur Anwendung kommen.

Weiters können sie keramisch gebunden werden durch Gläser, beispielsweise Silikat- oder Borgläser und/oder durch die Anwendung von glasbildenden Substanzen oder durch feinstteiliges oberflächlich aufgetragenes Material, das in seiner Zusammensetzung dem jeweiligen feuerfesten Material entspricht. Ein Beispiel für letztere Anwendungsform wären Korundkugeln, die mit einem feinstteiligen amorphen Aluminiumoxidpulver im Angström-Bereich beschichtet oder gemischt werden. Das feinstteilige Pulver sintert bei niedrigen Temperaturen als grobkörniges Pulver und vermag dadurch einen stofflich homogenen, festen, hochrefraktären Körper zu bilden.

Bei der Anwendung von Gläsern soll die Menge der Glasur bis 60 Gew. % des fertigen Filtermediums betragen. Zweckmässig beträgt die Menge der Glasur 20 bis 60 Gew. %, vorzugsweise 20 bis 40 Gew. %, des fertigen Filtermediums.

Bei geeigneter Wahl von Körnern und Wahl eines keramischen Bindemittels kann ein stofflich homogener Körper auch dadurch erzielt werden, dass das Bindemittel und das feuerfeste Material in gegenseitige Reaktion treten und unter Bildung eines neuen hochrefraktäten Materials eine hochrefraktäre Bindung bilden.

Es ist auch möglich, die Körner ohne Zusatz einer Fremdphase unterinander zu binden. Die Körner werden zur gegenseitigen Bindung lediglich zusammengesintert.

Die Filtermedien können entsprechend ihren Einsatzzwecken modifiziert werden.

Durch Beschichten der freien Kornoberfläche innerhalb des Filtermediums mit aktiviertem Aluminiumoxid, wobei das aktivierte Aluminiumoxid 3 bis 40 Gew.-% des gesamten Filtermediums beträgt, kann eine BET-Oberfläche von mindestens 50 m$^2$/g erreicht werden.

Das Filtermedium wird dazu zweckmässig mit einem Schlicker aus aktivierter Tonerde, vorzugsweise $\gamma$-Tonerde als Rohmaterial, und einer geringen Menge Binder beschichtet und dann aktiviert. Ein anwendbares Verfahren wird in der US-PS 4 287 098 beschreiben.

Das Filtermedium kann auch mit Kohlenstoff beschichtet sein, wobei die Menge des Kohlenstoff 3 bis 40 Gew.-% des gesamten Filtermediums betragen kann. Als Kohlenstoff können auch Koks, Pech und Graphit verstanden werden.

Eine weitere Möglichkeit zur Verbesserung der Benetzung und zur Vergleichmässigung der Metallführung besteht darin, die freien Kornoberflächen des Filtermediums allein oder zusätzlich zu anderen Behandlungen mit 0,5 bis 20 Gew.-% bezogen auf das Gesamtgewicht des Filtermediums, mit einem Flussmittel für Metalle zu überziehen.

Als Flussmittel für Metalle dienen Salze wie Chloride oder Fluoride. Für Aluminium werden beispielsweise $Na_3AlF_6$, $NaCl$, $KCl$, $CaF_2$, $AlCl_3$, $LiF$, $NaF$, $KF$ oder deren Gemische angewendet.

Der Filter kann auch aus wenigstens drei Schichten aufgebaut sein, wobei die mittlere Schicht in loser Schüttung oder in gebundener Form beispielsweise fluoridhaltige Verbindungen enthält.

Die Schicht kann aus feinteiligem, $AlF_3$-haltigem Material oder ganz oder zum Teil aus Alkalifluoaluminaten, die bei der Temperatur des geschmolzenen Metalls fest sind, bestehen. Wenn es hauptsächlich um die Entfernung von Lithium, Magnesium und Calcium geht, kann die lose Schüttung als Bett aus reaktiven Teilchen aus Kryolit oder einem lithiumfreien Elektrolyten mit einem niedrigen Verhältnis von $NaF:AlF_3$, d.h. enthaltend $AlF_3$ im Ueberschuss zu der für $Na_3AlF_6$ erforderlichen stöchiometrischen Menge, bestehen, unter der Voraussetzung, dass der grössere Anteil des Materials bei der Behandlungstemperatur fest bleibt. Dies ist normalerweise der Fall, wenn das vorerwähnte Verhältnis im Bereich von 1:3 bis 1:5 aufrechterhalten wird. Die aktiven Fluoridsalze können einen Anteil an inertem Material, wie Aluminiumoxid, enthalten.

Eine weitere vorteilhafte Ausführungsform liegt darin, dass im feuerfesten Material oder auf der Kornoberfläche keramische Fasern in Mengen von 0,01 bis 10 Gew.-% bezogen auf die Menge feuerfesten Materials enthalten sind und die keramischen Fasern mit wenigstens einem ihrer Faserenden über die Kornoberfläche herausragen.

Als keramische Fasern können Fasern aus Aluminiumoxiden, Aluminiumsilikaten, Zirkonoxiden, Bor, Siliciumcarbid oder Kohlenstoff eingesetzt werden. Im Rahmen vorliegender Erfindung liegen auch alle natürlich vorkommenden Mineralfasern.

Die Körner werden fraktionenweise, soweit vorgesehen, mit dem anorganischen Binder und einem beim Erwärmen verbackenden Mittel, zur Erzielung einer ausreichenden Grünfestigkeit, gemischt. Bevorzugt mischt man das chemische oder das keramische Bindemittel und das verbackende Mittel vor und mischt dann erst das feuerfeste Material zu.

Als verbackendes Mittel kommen organische Verbindungen, wie Carboxymethylcellulose, Polyvinylalkohole, Dextrin, Sulfitablauge usw. und anorganische Verbindungen, wie Monaluminiumphosphat, Calciumaluminat, $SiO_2$-Sol und Natriumsilikat (Wasserglas), allein oder in Mischung untereinander, in Frage. In der Regel werden die verbackenden Mittel in wässriger Lösung verarbeitet.

Das verbackende Mittel hat die Aufgabe, anfänglich den einzelnen Körnern bindende oder haftende Eigenschaften zu verleihen und bis zum endgültigen Brand aus dem Korngemisch eine formbare Masse zu bilden. In der Regel wird das Korngemisch, falls erforderlich, das Bindemittel und das verbackende Mittel mit Wasser auf an sich bekannte Weise, wie durch Kneten oder Rühren, angemischt.

Die Formgebung der gemischten Masse kann durch verschiedene Methoden, wie Stampfen, Einrütteln oder Giessen in eine Form, uniaxiales oder isostatisches Verpressen oder durch Extrudieren erfolgen. Eine Trocknung wird in Abhängigkeit von der Art und Zusammensetzung der verbackenden Mittel, in der Regel bei 80 bis 100°C, durchgeführt und ergibt eine gute Grünfestigkeit des Formkörpers nach spätestens 24 Stunden.

Bei der Anwendung von Na-Silikat oder Sulfitablauge als Binder kann nach bekannten Verfahren durch Behandlung mit $CO_2$ auf die Trocknung verzichtet werden.

Entsprechend den verschiedenen Schichten wird Schicht um Schicht aufgebaut, wobei die neue Schichtung vor oder nach dem Trocknen, als auch nach dem Brand aufgebracht werden kann.

Um die Porosität in höherem Masse zu steuern, kann eine mögliche Herstellungsform kann darin bestehen, vorzugsweise dem feuerfesten Material der Schicht A, einen Anteil an brennbarem Granulat oder Körnern beizumischen. Dazu kann beispielsweise Korkmehl oder Styropor verwendet werden. Während des Brennprozesses verschwindet das brennbare Material und hinterlässt einen Körper mit entsprechend erhöhter Porosität und grösserem Porendurchmesser.

Der keramische Brand erfolgt in einem Gas- oder Elektroofen bei Temperaturen, die von der Art der Bindung abhängig sind, sowie in Abhängigkeit der Zusammensetzung des feuerfesten Materials.

Das verbackende Mittel verflüchtigt sich oder verbrennt weitgehend rückstandslos spätestens während des Brennprozesses.

Der Aufbau des erfindungsgemässen Filtermediums entspricht bereits in grünem Zustand einer nahezu dichten Kugelpackung. Hierdurch wird eine Minimalisierung der bei der Sinterung von refraktären Stoffen üblicherweise auftretenden Schwindung aufgrund von Umlagerungen und Diffusionsprozessen erreicht.

Die erfindungsgemässen Filtermedien werden zur Filtration verschiedener schmelzflüssiger Metalle verwendet. In einer vorzugsweisen Ausführungsform werden die erfindungsgemässen Filtermedien zum Filtrieren von schmelzflüssigem Aluminium verwendet.

Die Filtration von schmelzflüssigem Kupfer, Kupferlegierungen, Grauguss, Titan, usw. ist ebenfalls möglich.

Die erfindungsgemässen Filtermedien eignen sich auch für das Rheocasting-Verfahren.

Entsprechend dem Schmelzpunkt und der Filtrationstemperatur des Metalls muss die Wahl des feuerfesten Materials und des anorganischen Binders getroffen werden.

Es lassen sich Filterelemente in nahezu beliebiger Form und Grösse herstellen. Bei der Verwendung von hohlkugeligen Körnern werden zudem relativ geringe spezifische Dichten erreicht, so dass auch grosse Filterelemente selbsttragend und thermowechselbeständig sind. Eine bevorzugte Anwendungsform liegt darin, dass das Filtermedium die Form einer Platte mit abgeschrägten Randflächen aufweist. Eine derartige Platte kann beispielsweise anstelle einer Filterplatte, wie sie in der schweizerischen Patentschrift 622 230 beschrieben ist, eingesetzt werden.

Neben Filterplatten sind auch Filterrohre, Filterkerzen, Filtertiegel und Filterblöcke leicht herzustellen und in entsprechende Filtertrögen einzusetzen und anzuwenden. Im Gegensatz zu den bisher bekannt gewordenen Formen von Filtern ist es möglich den erfindungsgemässen Filtermedien eine strukturierte Oberfläche zu verleihen.

Der Aufbau in verschiedenen Schichten in den erfindungsgemässen Filtermedien bewirkt, dass das zu filtrierende schmelzflüssige Metall homogen im Filter verteilt und die innere Oberfläche gleichmässig und vollständig benetzt wird. Damit ist der Filter auf seiner ganzen Fläche filterwirksam, was zu hohen Durchflussmengen führt, und durch die vollständige Benetzng der ganzen inneren Oberfläche wird eine gute Filtrationswirkung erzielt.

Es ist ebenfalls möglich, auf Filter der bekannten Art, wie keramische Schaumfilter aus der CH-PS 622 230 oder "Rigid Filter Medias", bekannt aus der US-PS 3 524 548, eine erfindungsgemässe Schicht mit den Werten $d_B$, $f_B$ und $\lambda_B$ wobei $d_B$, $\lambda_B$ und $f_B$ die genannte Bedeutung haben, aufzubringen. Die Schicht wird vorzugsweise, in Metallflussrichtung gesehen, auf der Unterseite resp. der Hinterseite ~~des ursprünglichen Filterelementes~~, d.h. dem ursprünglichen Filterelement nachfolgend, angebracht. Diese zusätzliche Schicht vermag ebenfalls die Benetzung von Filterelementen bekannter Art erheblich zu verbessern.

Beispiele zum Patent Spherofilter 2

Beispiel 1 (Vergleichsbeispiel)

50 kg Hohlkugelkorund der Körnung 0,5 - 1 mm wurden in einem Intensivmischer mit einem Gemenge von 10 kg Glasur-Rohmischung und 7 l Carboxymethylcellulose-Lösung intensiv vermengt (Mischung 1). Die Glasur-Rohmischung enthielt 30 % $SiO_2$, 30 % Kalifeldspat, 15 % Kalziumkarbonat, 5 % Kalziumsilikat, 17 % Kaolin und 2,5 % Ton in einer Körnung von kleiner 60 Micron. Die Mischung aus Hohlkugelkorund, Rohglasur und Carboxymethylcellulose hatte eine trockene Konsistenz. Ein Teil dieser Mischung wurde in vorbereitete Metallrahmen der Grösse 30 x 30 x 5 cm mit abgeschrägten Wänden eingerüttelt und oberflächlich mit einer Metallrolle geglättet. Die Metallrahmen wurden sodann mit samt dem keramischen Gut in einen elektrischen Trokkenofen gesetzt und 24 Stunden bei 80 - 100°C getrocknet. Nach der Trocknung liess sich das keramische Gut entfernen und wies selbsttragende Konsistenz mit guter Kantenfestigkeit auf. Die Rohfilter wurden anschliessend in einen Elektroofen gesetzt und auf maximal 1280°C gebrannt. Die Haltezeit betrug 10 Minuten, die Aufheiz- und Kühlgeschwindigkeit betrugen ca. 100°C pro Stunde. - Die lineare Schwindung betrug 0 %.

Die gebrannten Filter wiesen folgende Merkmale auf:

| | |
|---|---|
| Farbe | weiss |
| Volumen | 4,3 l |
| Gewicht | 3,0 kg |
| Raumgewicht | 0,7 kg/l |
| Permeabilität, gemessen nach DIN 51 058 | 14 - 16 Microperm |
| Biegefestigkeit, gemessen an 15 Probestäben von 25 x 25 x 100 mm mit Auflageradius 14 mm, Auflageabstand 50 mm, bestimmt nach der Dreipunktmethode | 230 $\pm$ 50 N/cm$^2$ |
| Kaltdruckfestigkeit | 410 $\pm$ 50 N/cm$^2$ |
| Kantenfestigkeit | gut |

Ein in der beschriebenen Weise hergestellter Filter wurde in einem vorbereiteten Filtertrog, wie er in CH-PS 622 230 beschrieben ist, eingesetzt und mit direkter Gasflamme auf etwa 700$^{O}$C vorgewärmt. Eine Aluminiumlegierung mit der Bezeichnung 5182 (Metalltemperatur 700$^{O}$C) wurde nun in einer Durchflussmenge von 100 kg/min. aufgegeben. Die Anfahrhöhe (Metallniveau, bei welchem das Metall erstmals durch die Filterplatte durchdringt) betrug 570 mm. Das Betriebsniveau (Differenz der Metallhöhen vor und nach der Filterbox während des Betriebes) betrug am Anfang des Gusses 400 mm, nach 60 Minuten ca. 450 mm.

Die Metallqualität wurde an Hand von Metallproben, die vor und nach dem Filter zur jeweils gleichen Zeit gezogen worden waren, nach Diamantschleifen und Aetzen durch Auszählen der Einschlüsse ermittelt. Die Analyse ergab eine Reduktion der Einschlusszahl durch das Filter von etwa 80%.

# Beispiel 1

Beispiel 2
_____

50 kg Hohlkugelkorund der Körnung 1 - 2 mm wurden, wie in Beispiel 1 beschrieben, mit Glasur-Rohmischung und Carboxymethylcellulose-Lösung vermengt (Mischung 2). Ein Teil der Mischung 1, deren Herstellung in Beispiel 1 beschrieben wurde, wurde nun in einen Metallrahmen der Grösse 30 x 30 cm mit abgeschrägten Wänden bis zu einer Höhe von etwa 4 Kugellagen, d.i. 2 mm, aufgeschichtet und durch einen Metallroller verdichtet. Unmittelbar auf die so hergestellte Schicht aus feinem Material wurde ein Teil der Mischung 2 aufgebracht und nach Auffüllen auf eine Höhe von 5 cm durch Rollen verdichtet und geglättet. Die weitere Verarbeitung erfolgte durch Trocknen, Entformen und Brennen wie in Beispiel 1 beschrieben. - Der so hergestellte Filter wurde unter den gleichen Bedingungen, wie in Beispiel 1 illustriert, in einer Filterbox eingesetzt. Flüssiges Aluminium-Metall der Legierung 5182 wurde bei einer Temperatur von $700^{\circ}$C und bei einer Metallmenge von 6 t/h aufgegeben.

Die Betriebsdaten betrugen:

|  |  |
|---|---|
| Anfahrniveau | 380 mm |
| Betriebsniveau | 90 mm |
| Reinigungswirkung | >95 % |

Das Beispiel zeigt, dass bei verbesserten Betriebsdaten die Reinigungswirkung verbessert wurde.

Im Bild zu Beispiel 1 ist der Verlauf des Metallstandes zu sehen. Im Bild zu Beispiel 2 ergeben sich durch die Kombination von 2 Kugelschichten unterschiedlicher Feinheit zwei Spitzen des Metallstandes während des Anfahrprozesses, bei insgesamt erniedrigtem Anfahrniveau. Das sich einstellende Betriebsniveau ist durch die weitergehende Auffüllung des Filters ebenfalls niedriger, bei gleichem Metalldurchsatz wie im Beispiel 1.

0097114

Beispiel 3
_____

50 kg Hohlkugelkorund der Körnung 3 - 5 mm wurde, wie in den Beispielen 1 und 2 gezeigt, gemischt; ein Teil dieser Mischung wurde in eine Metallform der Grösse 584 x 584 mm mit einer Höhe von 50 mm auf eine bereits in der Form befindliche Schicht aus ca. 4 Kugellagen der Körnung 1 - 2 mm, vermischt wie oben beschrieben, aufgebracht und verdichtet. Die weitere Verarbeitung erfolgte wie in Beispiel 1 beschrieben. Der resultierende Filter (a) wurde in einem Durchflussmessgerät, wie in DIN 51058 (Bestimmung der spezifischen Gasdurchlässigkeit feuerfester Steine), bei 20 $Nm^3$/h Druckluft gemessen und zeigte einen Druckabfall von max. 3,20 mbar, gemessen in Strömungsrichtung der feinteiligen in Richtung grobteiligen Schicht, bzw. 1,30 mbar, gemessen in umgekehrter Richtung (Messfläche 33 $cm^2$). Das Aluminium-Metall der Legierung Peraluman 100 hatte eine Temperatur von 710°C und wurde mit einer Leistung von 24 t/h gefördert. Die Betriebsdaten waren wie folgt und im Vergleich zu einem Filter (b) gleicher Grösse, aber der durchgehenden Körnung 2 - 3 mm:

| Filter | (a) | (b) |
|---|---|---|
| Anzahl Kugelschichten | 2 schichtig | 1 schichtig |
| Anfahrniveau | 135 mm | 180 mm |
| Betriebsniveau | 50 mm | 80 mm |

Der Filter mit der Körnung 2 - 3 mm musste nach wenigen Minuten durchstochen werden, weil die Metallmenge von 24 t/h die Kapazität des Filters überstieg.

Die in der beschriebenen Weise an Metallproben vor und nach dem Filter (a) gemachten Analysen der Einschlüsse ergaben eine Reduktion um gemittelt 90 %.

Die durch stereologische Vermessung der Anschliffe festgestellte Penetration des frei durchströmbaren Filtervolumens ergab für den Filter (a) 87 %, für den Filter (b) 69 %.

# Beispiel 2

Patentansprüche

1. Filtermedium in Form eines stabilen Körpers aus keramischem Material zur Filtration von schmelzflüssigen Metallen, dadurch gekennzeichnet, dass das Filtermedium

- aus wenigstens zwei filterwirksamen Schichten aufgebaut ist,

- die Schichten in Filtrationsrichtung aufeinander folgen,

- eine Schicht A eine Dicke $d_A$ von 9 bis 91 mm, eine Porosität $f_A$ von 0,25 bis 0,8 und einen Porendurchmesser $\lambda_A$ von 0,5 bis 2 mm aufweist, und dass die dem Filtrierwiderstand der Schicht A proportionale Grösse $H_{SA}$,

die gleich $\dfrac{d_A}{\lambda_A^2 f_A}$ ist, Werte von 28 bis 14'560 cm$^{-1}$ aufweist,

- eine zweite Schicht B eine Dicke von $d_B$ von 1 bis 33 mm, eine Porosität $f_B$ von 0,25 bis 0,5 und einen Porendurchmesser $\lambda_B$ von 0,2 bis 1 mm aufweist, und dass die dem Filtrierwiderstand der Schicht B proportionale Grösse $H_{SB}$,

die gleich $\dfrac{d_B}{\lambda_B^2 f_B}$ ist, Werte von 20 bis 33'000 cm$^{-1}$ aufweist,

- das Verhältnis der Dicke $d_A$ zur Dicke $d_B$ zwischen 9 : 1 und 3 : 1 liegt,

- und das Verhältnis der Zahlenwerte der Grössen $H_{SA}$ zu $H_{SB}$ = 1:1,2 bis 1 : 30 beträgt.

- 22 -

2. Filtermeidum nach Anspruch 1, dadurch gekennzeichnet, dass die Schicht A in Filtrationsrichtung vor der Schicht B angeordnet ist.

3. Filtermedium nach Anspruch 1 und 2, dadurch gekennzeichnet, dass die Schichten A und B aus feuerfestem Material in Form kugeliger und/oder hohlkugeliger untereinander fest gebundener Körner gebildet sind.

4. Filtermedium nach Anspruch 1 und 2, dadurch gekennzeichnet, dass die Schicht B aus feuerfestem Material in Form kugeliger und/oder hohlkugeliger untereinander fest gebundener Könrer gebildet ist.

5. Filtermedium nach Anspruch 1 bis 4, dadurch gekennzeichnet, dass als feuerfestes Material Hohlkugelkorund angewendet wird.

6. Filtermedium nach Anspruch 1 bis 5, dadurch gekennzeichnet, dass die Hohlkugelkorundkörner in enger Kornverteilung angewendet werden, wobei in einer Kornfraktion der minimale Korndurchmesser mehr als 65% beträgt, wenn der maximale Korndurchmesser mit 100% angenommen wird.

7. Filtermedium nach Anspruch 1 bis 6, dadurch gekennzeichnet, dass die Körner mit einer Glasur als Bindephase untereinander fest gebunden werden, wobei die Menge der Glasur 20 bis 40 Gew.% des fertigen Filtermedium beträgt.

0097114

8. Filtermedium nach Anspruch 1 bis 6, dadurch gekennzeichnet, dass die Körner mit einer kristallinen Substanz untereinander fest gebunden sind.

9. Filtermedium nach Anspruch 1 bis 8, dadurch gekennzeichnet, dass der Filter aus drei Schichten aufgebaut
ist, wobei mindestens eine Schicht eine fluoridhaltige
Verbindung enthält.